# EUROPEAN PATENT SPECIFICATION

(11) **EP 4 071 636 B1**
(45) Date of publication and mention of the grant of the patent: **10.09.2025**
(21) Application number: 22162932.2
(22) Date of filing: 18.03.2022
(51) Int. Cl.: G06F 16/955

(54) **DATA MANAGEMENT APPARATUS, INFORMATION PROCESSING SYSTEM, DATA MANAGEMENT METHOD, AND CARRIER MEANS**
DATENVERWALTUNGSVORRICHTUNG, INFORMATIONSVERARBEITUNGSSYSTEM, DATENVERWALTUNGSVERFAHREN UND TRÄGERMITTEL
APPAREIL DE GESTION DE DONNÉES; SYSTÈME DE TRAITEMENT D'INFORMATIONS; PROCÉDÉ DE GESTION DE DONNÉES ET MOYEN DE SUPPORT

(30) Priority: 09.04.2021 JP 2021066276
(43) Date of publication of application: 12.10.2022
(73) Proprietor: Ricoh Company, Ltd., Tokyo 143-8555 (JP)
(72) Inventor: Utoh, Yohsuke, Tokyo, 143-8555 (JP)
(74) Representative: Marks & Clerk LLP

(56) References cited:
- US-A1- 2008 046 292
- US-A1- 2008 155 701
- US-A1- 2017 031 638

## Description

### Technical Field

The present disclosure relates to a data management apparatus, an information processing system, a data management method, and a carrier means.

### Related Art

A document management system that manages documents created in performing tasks as electronic data is known.

For example, Japanese Unexamined Patent Application Publication No. 2008-259211 discloses a system that performs processing such as optical character recognition (OCR) on an electronic document.

However, when the document processing system is to execute the processing for the document managed by the document management system, a user is requested to perform complicated operations. For example, the user downloads a document from the document management system, uploads the document to the document processing system, and then manually inputs a processing execution instruction for the document. Then, the user inputs an operation instruction to the document processing system to access the result of the processing.

US-A-2008155701 discloses systems and methods for detecting the use of rights in media, for example, where the use is based on a content file's presentation on a network.

US-A-2017031638 discloses image forming apparatus including a printing unit connectable to a print server system with a print service providing print data. The image forming apparatus includes a reception unit that receives a URL from the print service in response to receipt of a print instruction, the URL indicating a location where the print data is stored and receives the print data based on the received URL, and a transmission unit that transmits the received print data to the printing unit. The transmission unit starts communication with the printing unit in response to receipt of partial print data, does not disconnect communication with the printing unit before receipt of a remainder of the print data finishes, and disconnects communication with the printing unit in response to completion of transmission of all of the print data.

### SUMMARY

The invention provides a data management apparatus, an information processing system, a data management method, and a carrier means as set out in the appended claims.

The present disclosure describes the information processing system, the data management apparatus, and the data management method each of which enables to reduce operational burden for accessing the result of processing the data.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a block diagram illustrating an example of a configuration of an information processing system according to a first embodiment of the present disclosure;
FIG. 2 is a block diagram illustrating a hardware configuration of a document management apparatus according to the first embodiment of the present disclosure;
FIG. 3 is a block diagram illustrating an example of a functional configuration of the document management apparatus and a document processing apparatus according to the first embodiment of the present disclosure;
FIGs. 4A and 4B (FIG. 4) are a sequence diagram illustrating a process executed by the information processing system according to the first embodiment of the present disclosure;
FIG. 5 is a diagram illustrating an example of an upload screen;
FIG. 6 is a table illustrating a state of target metadata at completion of step S106 according to the first embodiment of the present disclosure;
FIG. 7 is a diagram illustrating an example of workflow information according to the first embodiment of the present disclosure;
FIG. 8 is a diagram illustrating an example of a task list screen;
FIG. 9 is a table illustrating a state of target metadata at completion of step S113 according to the first embodiment of the present disclosure;
FIG. 10 is a diagram illustrating an example of a metadata confirmation screen;
FIG. 11 is a diagram illustrating an example of an account processing screen;
FIG. 12 is a table illustrating a state of target metadata at completion of step S121 according to the first embodiment of the present disclosure;
FIGs. 13A and 13B (FIG. 13) are a sequence diagram illustrating a process executed by the information processing system according to a second embodiment of the present disclosure;
FIG. 14 is a table illustrating a state of target metadata at completion of step S113a according to the second embodiment of the present disclosure;
FIG. 15 is a table illustrating a state of target metadata at completion of step S121 according to the second embodiment of the present disclosure;
FIG. 16 is a block diagram illustrating an example of a functional configuration of the document management apparatus and the document processing apparatus according to a third embodiment of the present disclosure;
FIGs. 17A and 17B (FIG. 17) are a sequence diagram illustrating a process executed by the information processing system according to the third embodiment of the present disclosure;
FIG. 18 is a diagram illustrating an example of the workflow information according to the third embodiment of the present disclosure;
FIG. 19 is a table illustrating a state of target metadata at completion of step S 113b according to the third embodiment of the present disclosure;
FIG. 20 is a table illustrating a state of target metadata at completion of step S206 according to the third embodiment of the present disclosure;
FIGs. 21A and 21B (FIG. 21) are a sequence diagram illustrating a process executed by the information processing system according to a fourth embodiment of the present disclosure; and
FIG. 22 is a diagram illustrating an example of the workflow information according to the fourth embodiment of the present disclosure.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

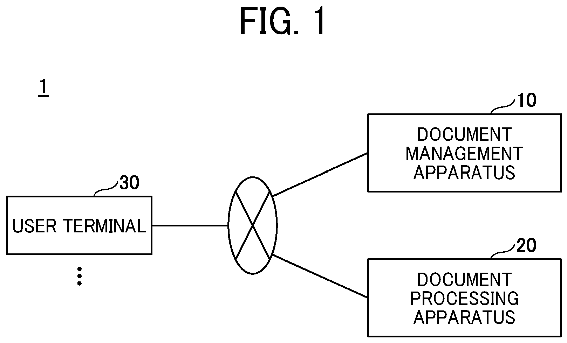

Embodiments of the present disclosure are described below with reference to the drawings. FIG. 1 is a block diagram illustrating an example of a configuration of an information processing system 1 according to a first embodiment of the present disclosure. In FIG. 1, the information processing system 1 includes one or more user terminals 30, a document management apparatus 10, and a document processing apparatus 20. Each of the user terminals 30 is connected to the document management apparatus 10 and the document processing apparatus 20 through a network such as a local area network (LAN) or the internet.

The document management apparatus 10 is implemented by one or more computers each of which may electronically store (save) a document. The document is managed in a virtual space, for example, as a document file and metadata. The document file is data indicating the document itself. For example, a file of image data obtained by scanning a paper document, a file of data electronically created by an application for creating the document, and the like correspond to the document file. The metadata is data that includes information related to the document. Examples of the metadata include bibliographic information of the document and contents of the document file. By managing the metadata for each document, the management system enables efficient search using the metadata as a search key. The management system also has a workflow function and outputs work instructions for the document to one or more users in an order defined in a workflow. In the present embodiment, an invoice is an example of the document.

The document processing apparatus 20 is implemented by one or more computers each of which performs predetermined processing on the document. The process executed by the document processing apparatus 20 may differ depending on a type of document. For example, when the document is the invoice, the document processing apparatus 20 executes OCR processing (analysis of the data structure of the document), account processing for inputting information to accounting software, and the like. A part or all of one or more computers implementing the document processing apparatus 20 may be the same as one or more computers implementing the document management apparatus 10.

The user terminal 30 is a terminal such as a personal computer (PC), a smartphone, or a tablet terminal used by a user of the document management apparatus 10 and the document processing apparatus 20. The user terminal 30 provides the user with user interfaces of the document management apparatus 10 and the document processing apparatus 20. In the present embodiment, the users include a sales representative, a sales manager, an accountant, and a chief accountant. These four users may use different user terminals 30, or any two or more users may use the same user terminal 30.

The sales representative is, for example, a specific individual who belongs to a sales department. In response to receiving the invoice, the sales representative uploads (registers) the document file of the invoice to the document management apparatus 10.

The sales manager is, for example, a specific individual who is a boss of the sales representative in the sales department.

The sales manager examines the contents of the document file uploaded by the sales representative (i.e., the contents of the invoice).

The accountant is, for example, a specific individual who belongs to an accounting department. The accountant performs account processing in the accounting department for the invoice approved by the sales manager. For example, the accountant inputs the contents of an invoice or inputs contents to a predetermined slip. The account processing does not depend on the document management apparatus 10. On the other hand, in the account processing, the document processing apparatus 20 is used to assist the accountant in inputting the contents of the invoice. Specifically, the document processing apparatus 20 generates text data indicating the contents of the invoice by executing OCR processing or the like on the document file of the invoice. The accountant does not have to manually input all the contents of the invoice but correct a misrecognized part of OCR in text data, thus reducing a load of account processing.

The chief accountant is, for example, a specific individual who is the boss of the accountant in the accounting department.

The chief accountant examines a result of the account processing.

The above four persons do not have to be different persons.

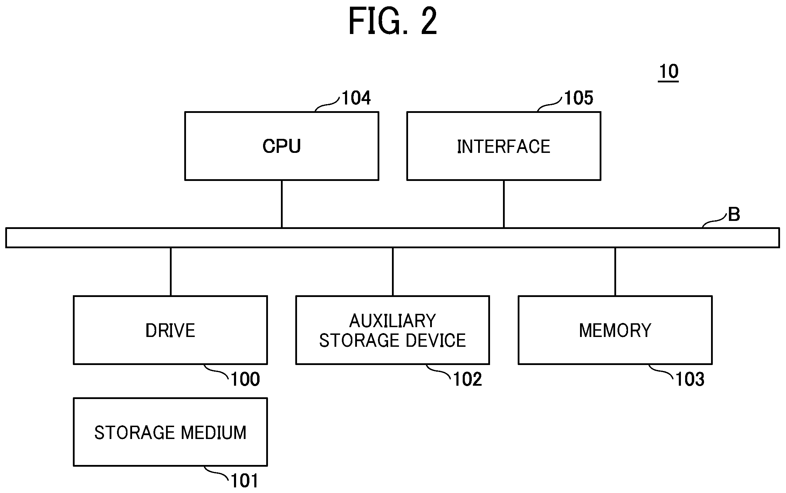

FIG. 2 is a block diagram illustrating a hardware configuration of the document management apparatus 10 according to the first embodiment. The document management apparatus 10 of FIG. 2 includes a drive 100, an auxiliary storage device 102, a memory 103, a CPU 104, an interface 105, and the like, which are connected to each other by a bus B, respectively.

One or more programs each of which executes the processing in the document management apparatus 10 are stored in a storage medium 101 such as a compact disk-read only memory (CD-ROM). In response to setting the storage medium 101 storing the program in the drive 100, the program is installed in the auxiliary storage device 102 from the storage medium 101 through the drive 100. However, the program may not be installed from the storage medium 101 and the program may be downloaded from another computer through the network. The auxiliary storage device 102 stores the installed program and also stores files and data. The auxiliary storage device 102 is, for example, a hard disk.

The memory 103 reads the program from the auxiliary storage device 102 and stores the program when an instruction to activate the program is given. The CPU 104 executes a function related to the document management apparatus 10 according to the program stored in the memory 103. The memory 103 is, for example, a volatile memory. The interface 105 is used as an interface for connecting to a network.

The document processing apparatus 20 and the user terminal 30 may also have the hardware configuration as illustrated in FIG. 2.

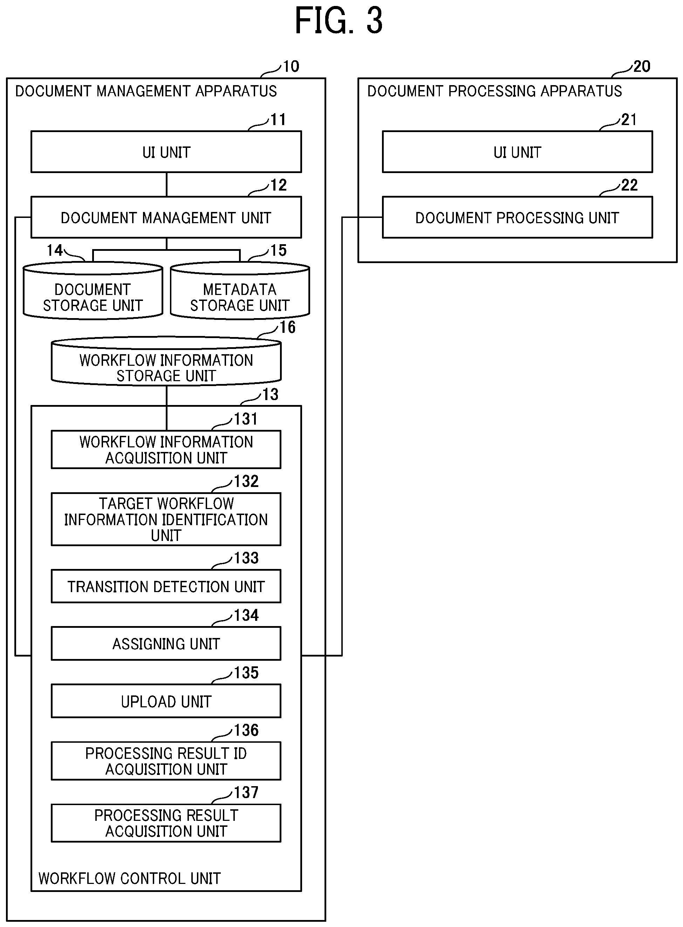

FIG. 3 is a block diagram illustrating an example of a functional configuration of the document management apparatus 10 and the document processing apparatus 20 according to the first embodiment of the present disclosure. In FIG. 3, the document management apparatus 10 includes a user interface (UI) unit 11, a document management unit 12, and a workflow control unit 13. Each of these units is implemented by a process executed by the CPU 104 according to one or more programs installed in the document management apparatus 10. The document management apparatus 10 also includes a document storage unit 14, a metadata storage unit 15, and a workflow information storage unit 16. Each of these storage units is implemented by, for example, the auxiliary storage device 102 or a storage device connected to the document management apparatus 10 through a network.

The document storage unit 14 is a database for storing document files. The metadata storage unit 15 is a database for storing document metadata. The workflow information storage unit 16 is a database for storing one or more pieces of workflow information.

The workflow information refers to information indicating a definition of a workflow.

The UI unit 11 provides a user interface (screen) related to the document management apparatus 10 to the user terminal 30.

The document management unit 12 manages the document file uploaded from the user terminal 30 and the metadata of the document related to the document file. The document management unit 12 stores the document file in the document storage unit 14 and stores the metadata in the metadata storage unit 15. The document management unit 12 associates the document file and the metadata related to the same document.

The workflow control unit 13 controls processing of the document managed by the document management unit 12 according to the workflow stored in advance in the workflow information storage unit 16. In the workflow control, the workflow control unit 13 controls tasks included in the workflow, exchanges data with an external system (document processing apparatus 20 in the present embodiment), and the like. In FIG. 3, the workflow control unit 13 includes a workflow information acquisition unit 131, a target workflow information identification unit 132, a transition detection unit 133, an assignment unit 134, an upload unit 135, a processing result identifier (ID) acquisition unit 136, and a processing result acquisition unit 137.

The workflow information acquisition unit 131 acquires all the workflow information stored in the workflow information storage unit 16. The workflow information includes a start trigger and definitions of one or more tasks in the order of execution. The workflow information including two or more tasks also includes one or more transition conditions from a task whose execution order is earlier to a task whose execution order is later. The start trigger is information indicating a start condition of the workflow included in the workflow information.

The target workflow information identification unit 132 identifies a workflow related to the workflow information for which the start trigger is satisfied as an execution target from one or more pieces of workflow information acquired by the workflow information acquisition unit 131.

The transition detection unit 133 detects whether the transition condition is satisfied with respect to the workflow being executed.

In response to a transition of execution target to a task related to an assignment of work to any user (in the present embodiment, the sales representative, the sales manager, the accountant, or the chief accountant) the assignment unit 134 executes an assignment process.

In response to a transition of execution target to an upload task of the document file to the document processing apparatus 20, the upload unit 135 executes the upload task.

The processing result ID acquisition unit 136 acquires from the document processing apparatus 20, a processing result ID indicating an acquisition destination of the processing result by the document processing apparatus 20 for the document file uploaded by the upload unit 135.

The processing result acquisition unit 137 acquires from the document processing apparatus 20, the processing result of the document processing apparatus 20 for the document file uploaded by the upload unit 135.

The document processing apparatus 20 includes a UI unit 21 and a document processing unit 22. Each of these units is implemented by the processing executed by the CPU of the document processing apparatus 20 caused by the one or more programs installed in a memory of the document processing apparatus 20.

The UI unit 21 provides a user interface (screen) for the document processing apparatus 20 to the user terminal 30.

The document processing unit 22 executes a predetermined process with respect to the document uploaded to the document processing apparatus 20. For example, the document processing unit 22 executes the OCR processing on the document.

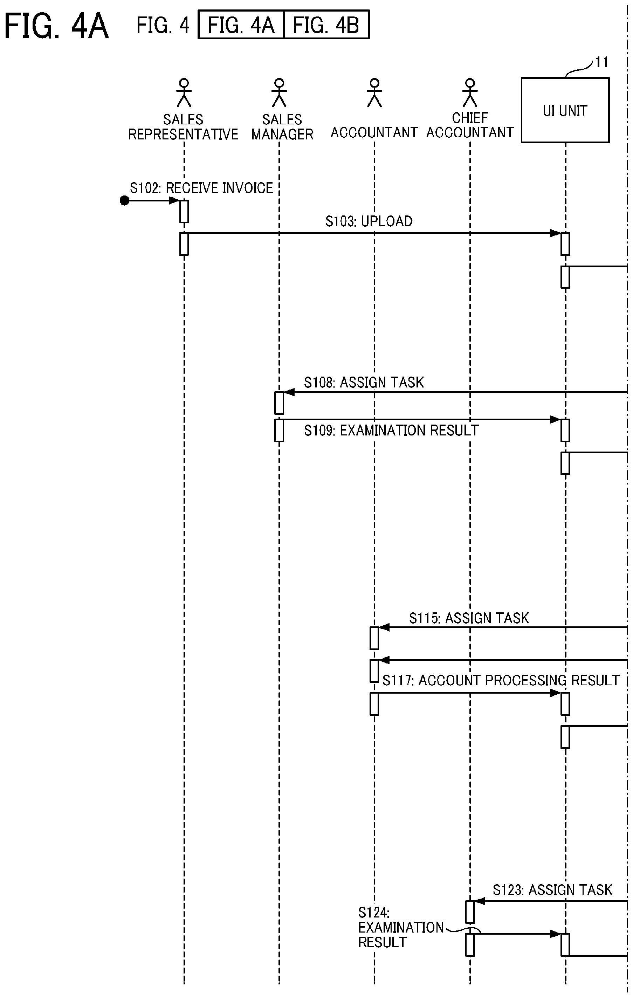

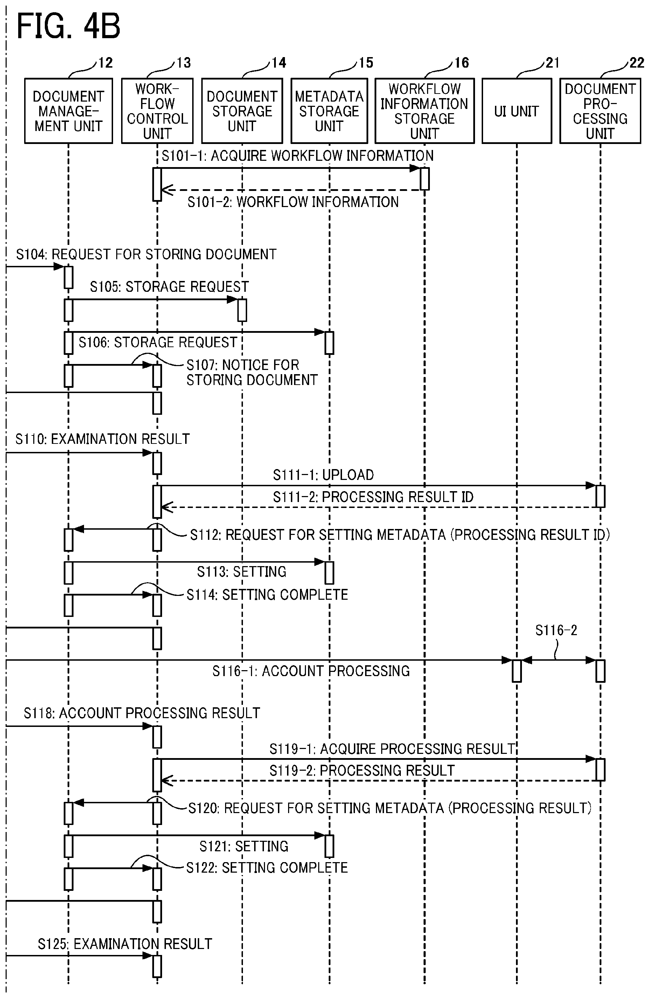

Hereinafter, a process executed by the information processing system 1 is described. FIGs. 4A and 4B (FIG. 4) are a sequence diagram illustrating a process executed by the information processing system 1 according to the first embodiment.

At any time before the execution of step S102, the workflow information acquisition unit 131 of the workflow control unit 13 acquires the workflow information from the workflow information storage unit 16 in steps S101-1 and S101-2. The target workflow information identification unit 132 of the workflow control unit 13 monitors whether the start trigger is satisfied for each acquired workflow information.

In step S102, the sales representative receives the invoice. In step S103, in response to the instruction of the sales representative, the user terminal 30 used by the sales representative uploads (transmits) the document file of the invoice (hereinafter referred to as a "target document file") to the document management apparatus 10. The instruction of the sales representative is input, for example, on the upload screen provided by the UI unit 11.

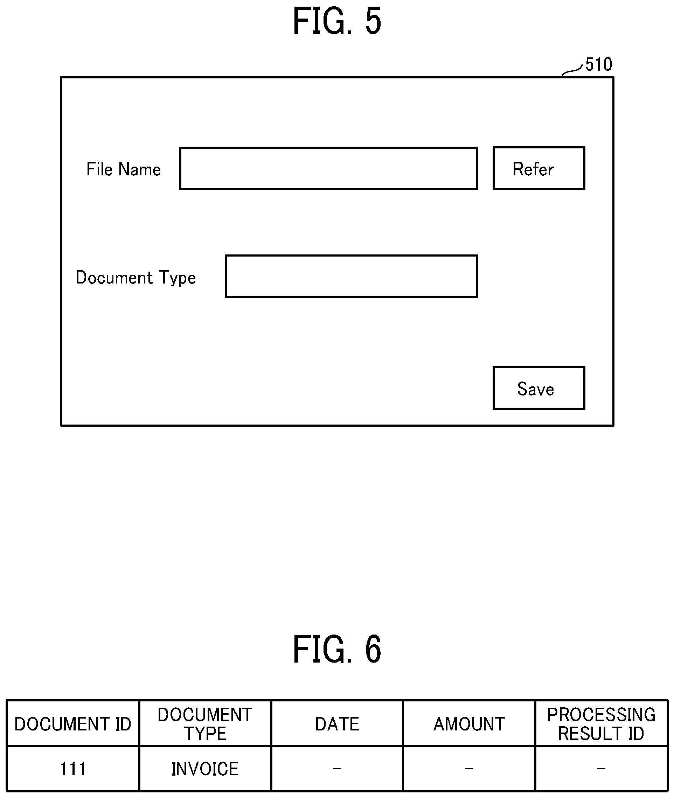

FIG. 5 is a diagram illustrating an example of the upload screen. As illustrated in FIG. 5, the upload screen 510 receives input of the file name of the document to be uploaded (hereinafter referred to as a "target document") and a type (document type) of the target document. The user terminal 30 used by the sales representative transmits to the document management apparatus 10, the target document file related to the file name input to the upload screen 510, and a character string indicating the document type input to the upload screen 510 (hereinafter, the character string is simply referred to as a "document type").

The document type is information indicating classification to which the target document belongs when the document group is classified based on the contents of the document such as an estimate or the invoice. The document type of the invoice is "invoice". In the present embodiment, the document type is used to identify the workflow to be executed for the document and the like. For example, in the case the information processing system 1 is a system dedicated to the invoice and the same workflow is executed for all documents, the document type may not be input.

In step S104, in response to receiving the uploaded target document file and document type (hereinafter referred to as a "target type"), the UI unit 11 requests the document management unit 12 to store the target document file and the target type. In step S105, the document management unit 12 assigns a new document ID (hereinafter referred to as a "target document ID") to the target document file, and stores the target document file in the document storage unit 14 in association with the target document ID. In step S106, the document management unit 12 stores the metadata (hereinafter referred to as "target metadata") associated with the target document ID and the target type in the metadata storage unit 15.

FIG. 6 is a table illustrating a state of target metadata at completion of step S106 according to the first embodiment of the present disclosure. As illustrated in FIG. 6, according to the first embodiment, the target metadata includes items such as a document ID, a document type, a date, an amount of money, and a processing result ID. At the completion of step S106, new metadata including the document ID and the document type among the items described above is stored in the metadata storage unit 15.

In step S107, the document management unit 12 notifies the workflow control unit 13 of the storing of a new document. The document management unit 12 notifies the workflow control unit 13 of the target document ID and the target type. The target workflow information identification unit 132 of the workflow control unit 13 identifies the workflow information to be applied to the target document from the one or more pieces of workflow information stored in the workflow information storage unit 16 based on the target type notified from the document management unit 12.

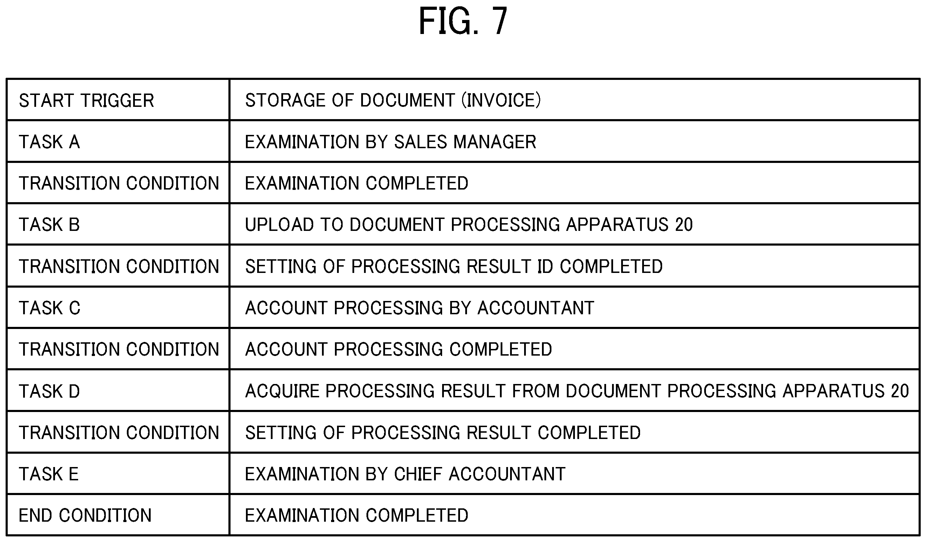

FIG. 7 is a diagram illustrating an example of workflow information according to the first embodiment of the present disclosure. FIG. 7 includes, in order from the top row, a start trigger, one or more tasks, one or more transition conditions, and completion (end) condition.

The start trigger "storage of document (invoice)" in FIG. 7 indicates the storage of the document whose document type is invoice. In step S107, the storage of the document and the target type ("invoice") are notified. Accordingly, the workflow information illustrated in FIG. 7 is applied. The start trigger is not limited to the storage of the document. For example, an arrival of a specific time or various other events may be set as a start trigger.

The task is a process included in the workflow. In FIG. 7, the task in the upper row is executed first.

The transition condition is a condition to be satisfied in order to transition from the task immediately before the transition condition to the task immediately after the transition condition. Since the workflow information of FIG. 7 includes five tasks of task A to task E, four transition conditions are included.

The end condition is a condition to be satisfied in order to end the workflow.

In the present embodiment, configuration of the workflow information is simplified for convenience, but the workflow information may be described by Extensible Markup Language (XML) or the like.

Hereinafter, the workflow information illustrated in FIG. 7 is referred to as "target workflow information".

In step S108, since the start trigger of the target workflow information is satisfied, the assignment unit 134 of the workflow control unit 13 notifies the sales manager of the assignment of task A ("examination by sales manager") to the target document based on the definition of task A ("examination by sales manager") of the target workflow information (FIG. 7). In FIG. 7, the definition of task A is abstracted and expressed as "examination by sales manager". Specifically, the definition of task A is computer-understandable information that includes identification information of the "sales manager" as a performer of the task and "examination" as contents of the task. This feature is the same for the definitions of other items of the workflow information.

The notification of the assignment of task A to the sales manager may be done by sending an e-mail to an e-mail address of the sales manager. Alternatively, the assignment unit 134 may notify the assignment in response to the login to the document management apparatus 10 by the sales manager. The method of notifying the assignment is the same for other users. Each time the task is assigned, the assignment unit 134 stores the target document ID and the information indicating the assigned task in the auxiliary storage device 102 or the like in association with the user ID of an assignment destination user. Accordingly, the assignment unit 134 understands which task is assigned to which document for each user. In addition, each time a task is assigned, the assignment unit 134 stores in the auxiliary storage device 102 or the like, information indicating the task assigned to the target document (information indicating which task of which workflow information) in relation to the target document ID. Accordingly, the assignment unit 134 understands which task of which workflow is being executed for each document.

The user terminal 30 used by the sales manager, notified of the assignment of the task A, displays a task list screen in response to an operation by the sales manager. For example, the user terminal 30 may display the task list screen according to the login to the document management apparatus 10 by the sales manager or a particular operation after the login. Alternatively, the user terminal 30 may display the task list screen according to the selection of a uniform resource locator (URL) (URL corresponding to the assigned task) included in the email notifying the assignment of the task. In any case, the task list screen is displayed in a state where the display destination user (hereinafter referred to as a "target user") is specified. The target user here is the sales manager.

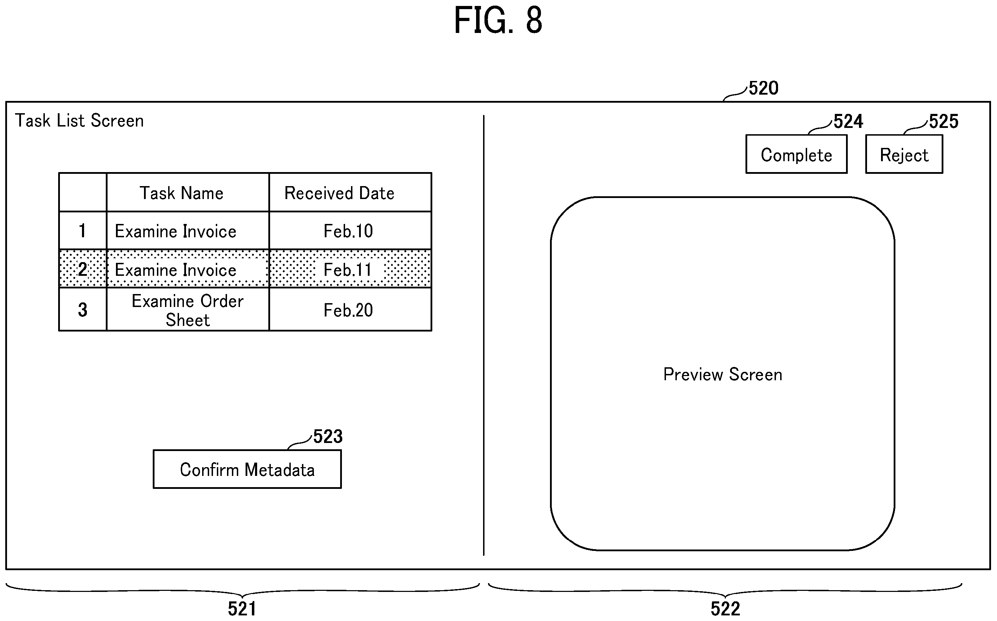

FIG. 8 is a diagram illustrating an example of the task list screen. As illustrated in FIG. 8, the task list screen 520 includes a task list area 521, a preview area 522, a metadata confirmation button 523, a completion button 524, and a rejection button 525.

The task list area 521 is an area displaying a list of tasks assigned to the target user. For example, when generating the task list screen 520, the UI unit 11 acquires a list of tasks assigned to the target user and displays the list in the task list area 521. The document ID of the document to which the task is applied is associated with each task listed in the task list area 521.

The preview area 522 is an area for displaying the document file related to the task selected in the task list area 521. For example, in response to a selection of a task in the task list area 521, the user terminal 30 transmits the document ID associated with the task to the document management unit 12. The document management unit 12 acquires the document file corresponding to the document ID from the document storage unit 14.

The document management unit 12 transmits the document file to the user terminal 30. The user terminal 30 displays the document file in the preview area 522.

The process for displaying the task list screen 520 is the same for other users (accountant, chief accountant).

The sales manager selects the task corresponding to the target document in the task list area 521 of the task list screen 520. As a result, the target document file is displayed in the preview area 522. The sales manager examines the target document with reference to the target document file (that is, the invoice) displayed in the preview area 522. As a result of the examination, the sales manager selects the completion button 524 when there is no problem and selects the rejection button 525 when there is a problem. In step S109, the user terminal 30 transmits an examination result ("completed" or "rejected") and the target document ID corresponding to the selected button to the document management apparatus 10.

In step S110, in response to receiving the examination result and the target document ID, the UI unit 11 of the document management apparatus 10 notifies the workflow control unit 13 of the examination result and the target document ID. In the case the examination result notified from the UI unit 11 is "completed", the transition detection unit 133 of the workflow control unit 13 detects that the transition condition ("examination completed") from task A to task B is satisfied based on the target workflow information (FIG. 7) related to the target document ID. The upload unit 135 of the workflow control unit 13 acquires the target document file through the document management unit 12 based on the definition of task B of the target workflow information ("upload to the document processing apparatus 20"). In step S111-1, the upload unit 135 uploads (sends) the target document file to the document processing unit 22 of the document processing apparatus 20. In the case the examination result is "rejected", the transition condition from task A to task B is not satisfied and step S111-1 is not executed. The same applies to other transition conditions in that the task at the transition destination is not executed when the transition condition is not satisfied.

In response to receiving the target document file, the document processing unit 22 of the document processing apparatus 20 executes a predetermined process on the target document file. In the present embodiment, the document processing unit 22 executes text data extraction (generation) processing such as the OCR processing on the uploaded document file. That is, the document processing unit 22 generates text data including contents of the target document file. The target document file does not have to be image data. For example, the target document file may be data in a format dependent on a specific application. In such case, the document processing unit 22 may generate text data including the contents of the target document file by converting the data in the specific format into text data. The document processing unit 22 generates identification information (hereinafter referred to as a "processing result ID") for making the text data generated as the result of the predetermined processing (OCR processing) accessible from outside. The document processing unit 22 stores the processing result (text data) and the target document file (that is, the data for processing) in association with the processing result ID (hereinafter, referred to as a "target processing result ID"). The processing result ID is, for example, a URL. The processing result ID is identification information for publishing the processing result by the document processing unit 22 on the network. In step S111-2, the document processing unit 22 transmits a response including the target processing result ID to the workflow control unit 13.

In response to receiving (acquiring) the target processing result ID, the processing result ID acquisition unit 136 of the workflow control unit 13 controls to store the target process result ID in the metadata storage unit 15 as a part of process of the task B. In step S112, the processing result ID acquisition unit 136 designates the target document ID and requests the document management unit 12 to set the target processing result ID in the target metadata (store the target processing result ID as metadata).

In step S113, in response to the request from the processing result ID acquisition unit 136, the document management unit 12 sets the target processing result ID in the target metadata corresponding to the target document ID designated in the request among the metadata stored in the metadata storage unit 15.

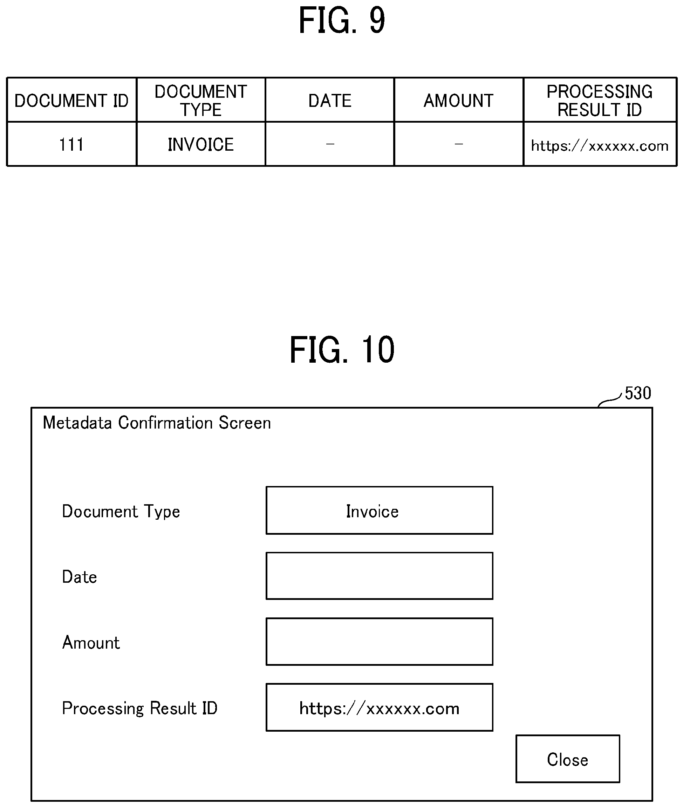

FIG. 9 is a table illustrating a state of the target metadata at completion of step S113 according to the first embodiment of the present disclosure. As illustrated in FIG. 9, at the completion of step S113, the target metadata includes the URL as the processing result ID.

In step S114, the document management unit 12 notifies the workflow control unit 13 of the completion of setting of the target processing result ID. The notification includes the target document ID.

Based on the notification of the completion of setting, the transition detection unit 133 of the workflow control unit 13 detects satisfaction of the transition condition ("setting of processing result ID completed") from task B to task C in the target workflow information (FIG. 7) related to the target document ID. In step S115, the assignment unit 134 assigns the task C ("account processing by accountant") to the target document based on the definition of the task C of the target workflow information ("account processing by accountant"). The user terminal 30 used by the accountant and notified of the assignment of the task C, displays the task list screen 520 (FIG. 8) in response to an operation by the accountant.

The accountant is supposed to do account processing related to the target document in task C ("account processing by accountant"). The account processing is to input the contents and the like of the target document (invoice), and the contents are stored in the document processing apparatus 20 as a processing result by the document processing apparatus 20. Accordingly, if the processing result can be obtained, the account processing can be made more efficient. However, in order for the accountant to obtain the processing result, the accountant is desired to know the acquisition source of the processing result. Accordingly, the accountant selects the metadata confirmation button 523 on the task list screen 520. The user terminal 30 used by the accountant displays the metadata confirmation screen in response to the selection of the metadata confirmation button 523.

FIG. 10 is a diagram illustrating an example of the metadata confirmation screen. As illustrated in FIG. 10, the metadata confirmation screen 530 is a screen for displaying the target metadata. At this point, the date and amount are empty as the target metadata as illustrated in FIG. 9. However, the information required for the accountant at this point is the processing result ID indicating the acquisition destination of the processing result by the document processing apparatus 20. The accountant can access the processing result by using the URL as the processing result ID.

The metadata displayed on the metadata confirmation screen 530 is acquired from the document management apparatus 10 by the user terminal 30 in response to the selection of the metadata confirmation button 523, for example. Specifically, in response to the selection of the metadata confirmation button 523, the user terminal 30 transmits a request for acquiring metadata including a document ID corresponding to the task selected in the task list area 521 (FIG. 8) to the document management unit 12. The document management unit 12 acquires the metadata stored in the metadata storage unit 15 in association with the document ID and transmits the metadata to the user terminal 30. As a result, the user terminal 30 displays the metadata confirmation screen 530 including the metadata. As described above, the metadata stored in the metadata storage unit 15 is planned to be transmitted to the user terminal 30. In other words, the metadata storage unit 15 is a storage unit that stores information to be transmitted to the user terminal 30. Therefore, the processing result ID acquisition unit 136 controls the storage of the target processing result ID in the metadata storage unit 15 in step S112 so that the target processing result ID can be transmitted to the user terminal 30.

In response to the selection of the URL as the target processing result ID displayed on the metadata confirmation screen 530 or input of the URL into the browser, the accounting process in steps S116-1 and S116-2 is executed. In the accounting process, the user terminal 30 used by the accountant first accesses the URL. Such an access in step S116-1 corresponds to a request to the UI unit 21 of the document processing apparatus 20 to acquire a processing result (OCR result) corresponding to the target document. In step S116-2, in response to the acquisition request, the UI unit 21 acquires from the document processing unit 22, the processing result and the target document file associated with the URL to be accessed. In step S116-1, the UI unit 21 generates screen data of the account processing screen including the processing result and the target document file and transmits the screen data to the user terminal 30. The user terminal 30 displays an account processing screen based on the screen data.

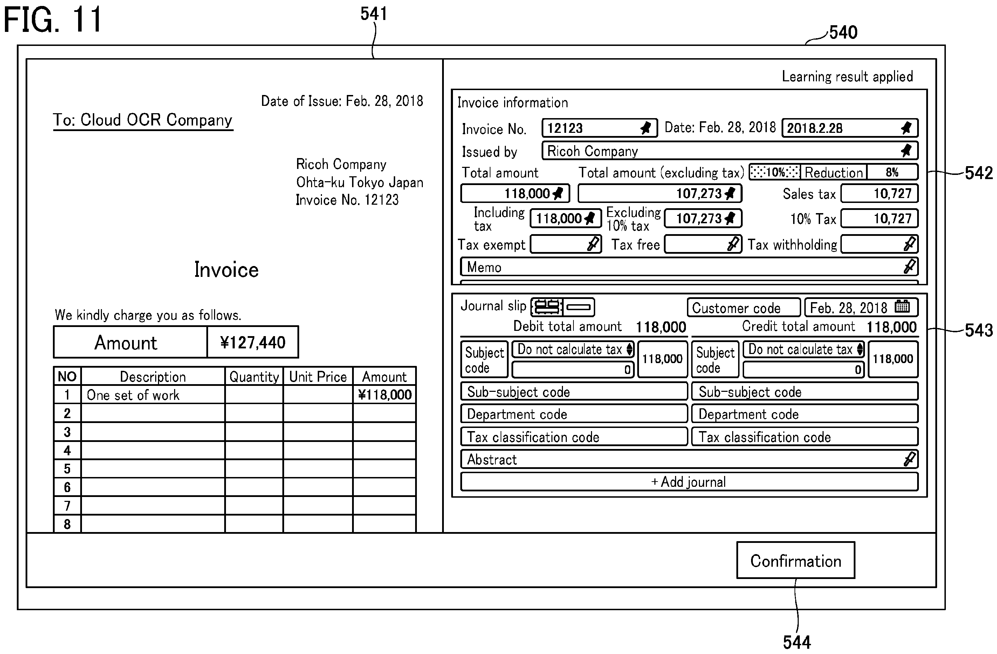

FIG. 11 is a diagram illustrating an example of the account processing screen. As illustrated in FIG. 11, the account processing screen 540 includes a preview area 541, an invoice information area 542, a journal slip area 543, and the like. The preview area 541 is an area in which the target document file is displayed. The invoice information area 542 is an area in which the contents of the target document is displayed. In the initial state of the account processing screen 540, the processing result (OCR result) by the document processing unit 22 on the target document file is displayed in each item of the invoice information area 542. The journal slip area 543 is an area to be input by the accountant in the account processing. The accountant confirms whether there is an error (that is, erroneous recognition by the document processing unit 22) in the contents of the invoice information area 542. In the case there is an incorrect item in the invoice information area 542, the accountant corrects the error.

In step S116-1, in response to a selection of the confirmation button 544 by the accountant after finishing the correction of the invoice information area 542 and the input of the journal slip area 543, the user terminal 30 transmits the contents of the invoice information area 542 and the contents of the journal slip area 543 to the UI unit 21. In step S116-2, the UI unit 21 requests the document processing unit 22 to store the contents of the invoice information area 542 and the contents of the journal slip area 543. The document processing unit 22 overwrites the processing result stored in association with the target processing result ID with the contents of the invoice information area 542.

As a result, for example, the correction for the erroneous recognition of OCR by the document processing unit 22 is reflected in the processing result. This completes the account processing.

In response to the completion of the account processing, the accountant selects the completion button 524 in the state where the task corresponding to the target document is selected in the task list area 521 of the task list screen 520 (FIG. 8) displayed by the user terminal 30. In step S117, the user terminal 30 transmits the account processing result ("completed") and the target document ID corresponding to the selected completion button 524 to the document management apparatus 10.

In step S118, in response to receiving the account processing result and the target document ID, the UI unit 11 of the document management apparatus 10 notifies the workflow control unit 13 of the account processing result and the target document ID. In the case the examination result notified from the UI unit 11 is "completed", the transition detection unit 133 of the workflow control unit 13 detects satisfaction of the transition condition ("account processing completed") from task C to task D based on the target workflow information (FIG. 7) related to the target document ID. In steps S119-1 and S119-2, the processing result acquisition unit 137 of the workflow control unit 13 acquires the processing result from the document processing unit 22 of the document processing apparatus 20, based on the definition of task D of the target workflow information ("acquire the processing result from the document processing apparatus 20").

In step S120, the processing result acquisition unit 137 requests the document management unit 12 to set the acquired processing result in the target metadata as a part of process of the task D. The request includes the target document ID.

In step S121, in response to the request from the processing result acquisition unit 137, the document management unit 12 sets the processing result in the target metadata corresponding to the target document ID included in the request among the metadata stored in the metadata storage unit 15.

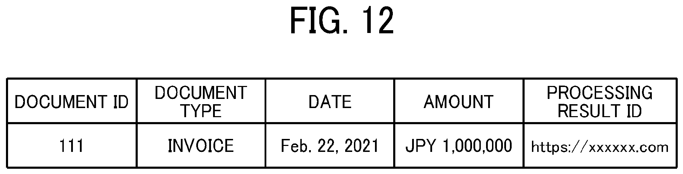

FIG. 12 is a table illustrating a state of target metadata at completion of step S121 according to the first embodiment of the present disclosure. As illustrated in FIG. 12, at the completion of step S121, the subject metadata includes the date and the amount. The value in FIG. 12 does not match the value in FIG. 11 for convenience. Further, the present embodiment describes an example in which a part of the processing result by the document processing unit 22 is set in the metadata. Alternatively, all the processing results by the document processing unit 22 may be set in the metadata.

In step S122, the document management unit 12 notifies the workflow control unit 13 of the completion of setting of the processing result. The notification includes the target document ID.

Based on the notification of the completion of setting, the transition detection unit 133 of the workflow control unit 13 detects satisfaction of the transition condition ("setting of processing result completed") from task D to task E in the target workflow information (FIG. 7) related to the target document ID. In step S123, the assignment unit 134 notifies the chief accountant of the assignment of task E ("examination by chief accountant") to the target document based on the definition of task E ("examination by chief accountant") of the target workflow information (FIG. 7).

The user terminal 30 used by the chief accountant and notified of the assignment of the task E, displays the task list screen 520 (FIG. 8) in response to the operation by the chief accountant. The chief accountant may perform any one of various operations. For example, the chief accountant may select the metadata confirmation button 523 of the task list screen 520 to display the metadata confirmation screen 530. In this case, the chief accountant clicks the URL as the processing result ID included in the metadata confirmation screen 530 or inputs the URL into the browser. The result of the account processing may be confirmed by referring to the processing result corresponding to the processing result ID.

To approve the result of the account processing, the chief accountant selects the completion button 524 in the state where the task corresponding to the target document is selected in the task list area 521 of the task list screen 520 (FIG. 8). In step S124, the user terminal 30 transmits the examination result ("completed") and the target document ID corresponding to the selected completion button 524 to the document management apparatus 10. In step S125, in response to receiving the examination result and the target document ID, the UI unit 11 of the document management apparatus 10 notifies the workflow control unit 13 of the examination result and the target document ID. In the case the examination result notified from the UI unit 11 is "completed", the transition detection unit 133 of the workflow control unit 13 detects satisfaction of the end condition of the workflow related to the target workflow information based on the target workflow information (FIG. 7) related to the target document ID.

In the above description, an example in which the processing result ID is the URL has been described, but when the identification information is such that the processing result can be accessed from the outside of the document processing apparatus 20, the identification information other than the URL may be used as the processing result ID.

As described above, according to the first embodiment, the document file is automatically uploaded from the document management apparatus 10 to the document processing apparatus 20. Accordingly, it is possible to eliminate the user operations such as downloading a document file from the document management apparatus 10 and uploading the document file to the document processing apparatus 20. However, when the document processing apparatus 20 executes the processing on the document file in response to the upload from the document management apparatus 10, it becomes difficult for the user (accountant) to obtain the processing result by the document processing apparatus 20. This is because the user does not directly input the processing execution instruction to the document processing apparatus 20, the processing result is not obtained as a response to the execution instruction.

Therefore, in the present embodiment, the processing result ID indicating the acquisition destination of the processing result is returned from the document processing apparatus 20 to the document management apparatus 10. The document management apparatus 10 stores the processing result ID in the metadata storage unit 15 that stores information transmitted to the user terminal 30 used by the user. As a result, the user can easily access the processing result by using the processing result ID.

Therefore, according to the present embodiment, it is possible to reduce the operational burden for accessing the execution result of the process for the data that is the target of the workflow even in the middle of the workflow (in which various users are involved).

Hereinafter, a description is given of a second embodiment. In the second embodiment, points different from the first embodiment is described. Points that are not particularly mentioned may be the same as described in the first embodiment.

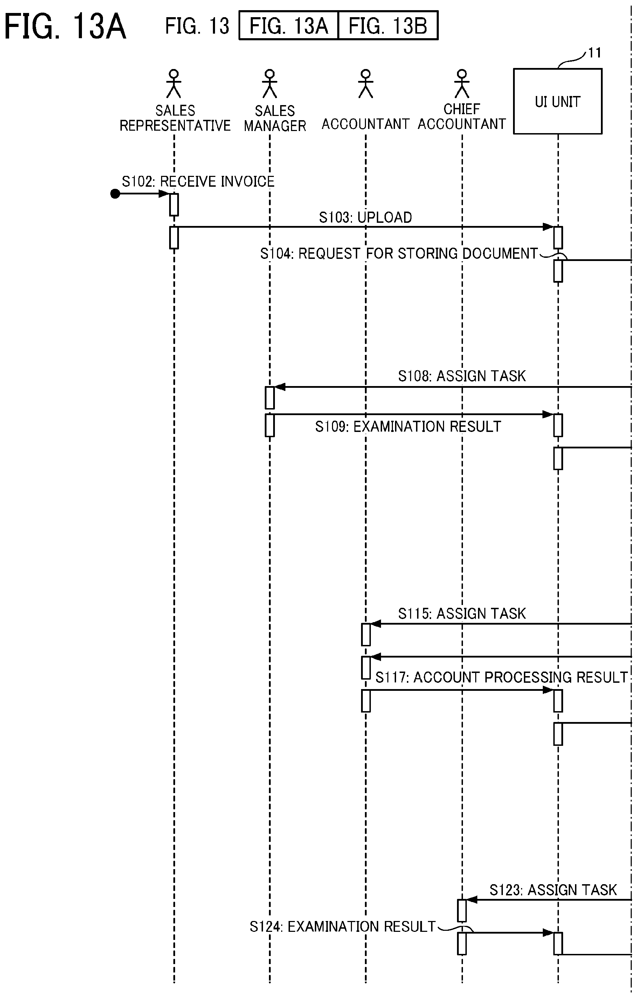

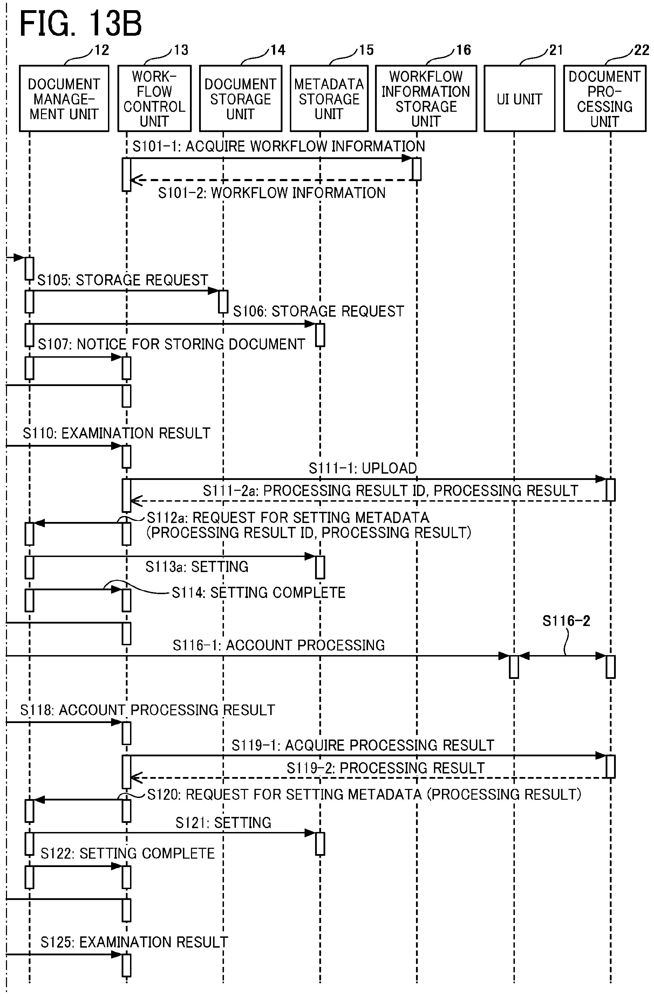

FIGs. 13A and 13B (FIG. 13) are a sequence diagram illustrating a process executed by the information processing system 1 according to the second embodiment of the present disclosure. In FIGs. 13A and 13B (FIG. 13), the same step numbers are assigned to the same steps as in FIG. 4, and the description thereof is omitted.

As illustrated in FIG. 13, in the second embodiment, steps S111-2, S112, and S113 in FIGs. 4A and 4B (FIG. 4) are replaced with S111-2a, S112a, and S113a, respectively.

In step S111-2a, the document processing unit 22 transmits a response including the processing result (for example, OCR result) related to the target processing result ID to the workflow control unit 13 in addition to the target processing result ID.

In response to receiving the target processing result ID and the processing result, the processing result ID acquisition unit 136 of the workflow control unit 13 controls to store the target process result ID and the process result in the metadata storage unit 15 for the target document as a part of process of the task B. Specifically, in step S112a, the processing result ID acquisition unit 136 requests the document management unit 12 to set the target processing result ID and the processing result in the target metadata (storing the target processing result ID and the processing result as metadata). The request includes the target document ID.

In step S113a, in response to the request from the processing result ID acquisition unit 136, the document management unit 12 sets the target processing result ID and the processing result in the target metadata corresponding to the target document ID included in the request among the metadata stored in the metadata storage unit 15.

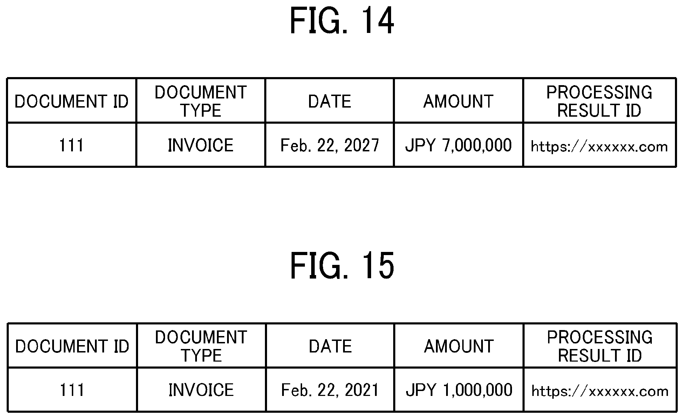

FIG. 14 is a table illustrating a state of target metadata at completion of step S113a according to the second embodiment of the present disclosure. As illustrated in FIG. 9, at the completion of step S113a, the target metadata includes in addition to the processing result ID, the date and amount included in the processing result by the document processing unit 22.

Subsequent processing procedures in FIGs. 13A and 13B (FIG. 13) are the same as the first embodiment (FIGs. 4A and 4B (FIG. 4)). In steps S119-1 to S121, the processing result is acquired again, and the date and amount of the target metadata are overwritten by the processing result.

FIG. 15 is a table illustrating a state of target metadata at completion of step S121 according to the second embodiment of the present disclosure.

The processing result is acquired again in step S119-2 because the processing result acquired in step S111-2a includes erroneous recognition of OCR processing by the document processing unit 22 and the like and such erroneous recognition may have been corrected in the account processing.

That is, in step S119-2, there is a possibility that the processing result obtained by modifying the processing result acquired in step S111-2a may be acquired.

To represent such possibility, FIG. 15 illustrates an example in which the date and amount in FIG. 14 have been modified. Specifically, in FIG. 14, "Feb. 22, 2027" and "7,000,000 yen" are set for the date and the amount respectively, but in FIG. 15, "Feb. 22, 2021" and "1,000,000 yen" are set. This indicates that the date and amount have been modified by the accountant. Alternatively, in the case there is no erroneous recognition by the document processing unit 22, the content of FIGs. 14 and 15 are the same.

As described above, according to the second embodiment, the same effect as that of the first embodiment can be obtained. Further, according to the second embodiment, since a tentative value is set for the metadata (date, amount) of the target document in step S113a, it is possible to search for the target document based on the metadata after the completion of step S113a.

Hereinafter, a description is given of a third embodiment. In the third embodiment, the differences from the first or second embodiment is described. Therefore, except for points particularly mentioned, the same may apply with the first or second embodiment.

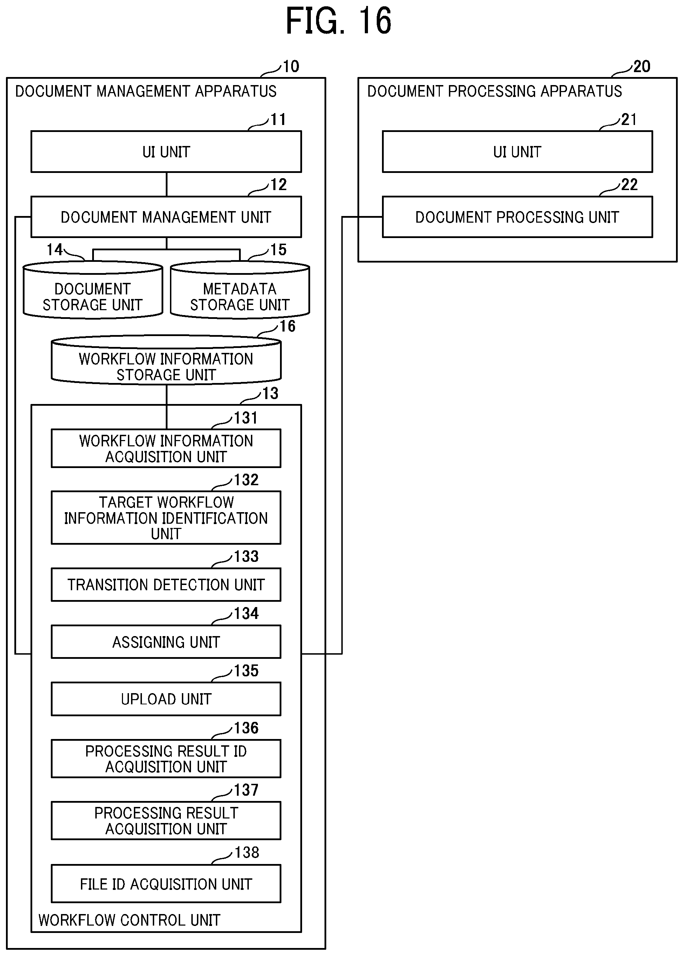

FIG. 16 is a block diagram illustrating an example of a functional configuration of the document management apparatus 10 and the document processing apparatus 20 according to the third embodiment of the present disclosure. In FIG. 16, the same reference numbers are allocated to the same functional units as those of FIG. 3, and redundant descriptions thereof are omitted below.

In FIG. 16, the workflow control unit 13 of the document management apparatus 10 further includes a file ID acquisition unit 138.

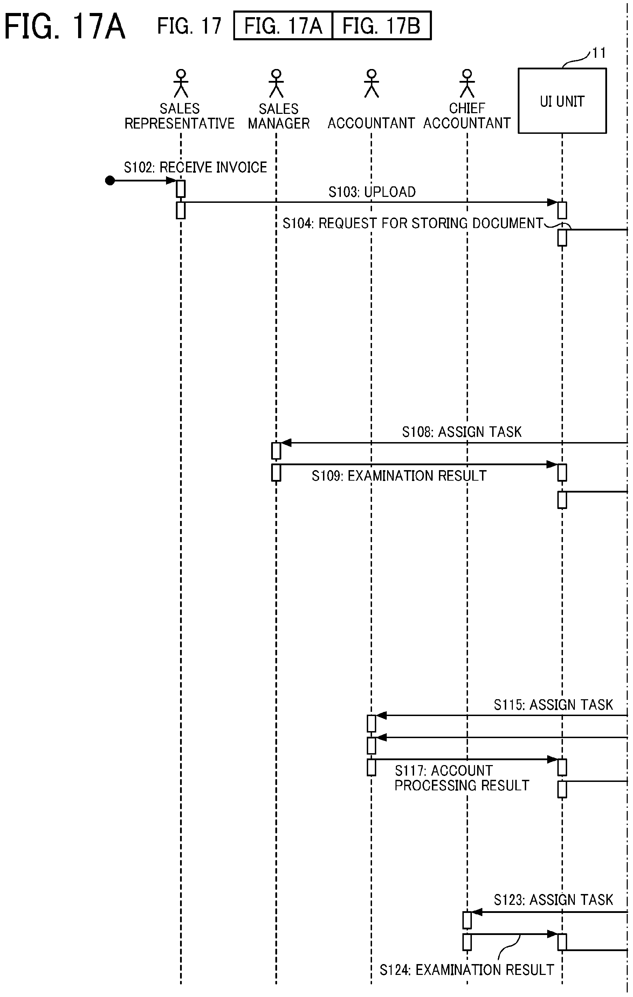

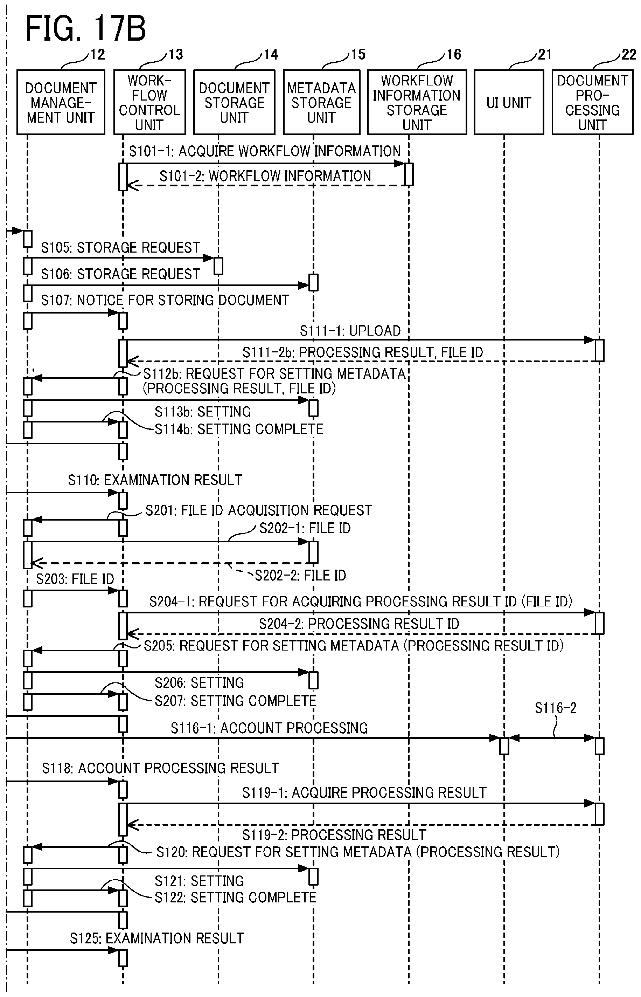

FIGs. 17A and 17B (FIG. 17) are a sequence diagram illustrating a process executed by the information processing system 1 according to the third embodiment of the present disclosure. In FIGs. 17A and 17B (FIG. 17), the same step numbers are assigned to the same steps in FIG. 4A and 4B (FIG. 4), and the description thereof is omitted as appropriate.

Steps S101 to S107 are the same as in FIG. 4A and 4B (FIG. 4). However, in FIGs. 17A and 17B (FIG. 17), the workflow information (that is, the target workflow information) acquired in steps S101-1 and S101-2 is different from the workflow information in FIG. 7.

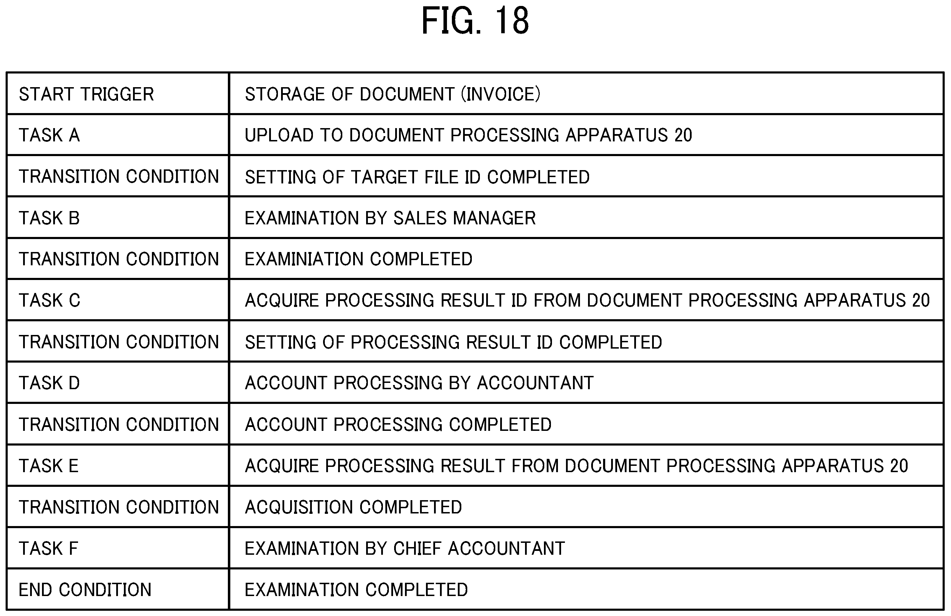

FIG. 18 is a diagram illustrating an example of the workflow information according to the third embodiment of the present disclosure. In the workflow information illustrated in FIG. 18, the start trigger is the same as in FIG. 7, but task A and task B are interchanged with respect to FIG. 7. In FIG. 18, "upload to the document processing apparatus 20" is set as task A.

In step S111-1, following step S107, the upload unit 135 uploads (sends) the target document file to the document processing unit 22 of the document processing apparatus 20.

The process executed by the document processing unit 22 of the document processing apparatus 20 in response to the reception of the target document file is basically the same as that of each of the above embodiments. However, the document processing unit 22 according to the third embodiment does not generate the processing result ID at this point. Instead, the document processing unit 22 generates a file ID as identification information for the target document file. The document processing unit 22 stores the processing result (OCR result, etc.) in association with the file ID. At this time, the document processing unit 22 locks (restricts access) the processing result in order to restrict (prohibit) access to the processing result for the file ID (hereinafter referred to as a "target file ID"). Accordingly, the document processing unit 22 restricts (prohibits) access to the processing result until the lock is released. In step S111-2b, the document processing unit 22 transmits a response including the target file ID and the processing result to the workflow control unit 13. However, the processing result may not be transmitted at this point.

In response to receiving the target file ID, the file ID acquisition unit 138 of the workflow control unit 13 controls the storage of the target file ID and the processing result in the metadata storage unit 15 for the target document as a part of process of the task B. Specifically, in step S112b, the file ID acquisition unit 138 designates the target document ID and requests the document management unit 12 to set the target file ID and the processing result in the target metadata.

In step S113b, in response to the request from the file ID acquisition unit 138, the document management unit 12 sets the target file ID and the processing result in the target metadata corresponding to the target document ID designated in the request among the metadata stored in the metadata storage unit 15.

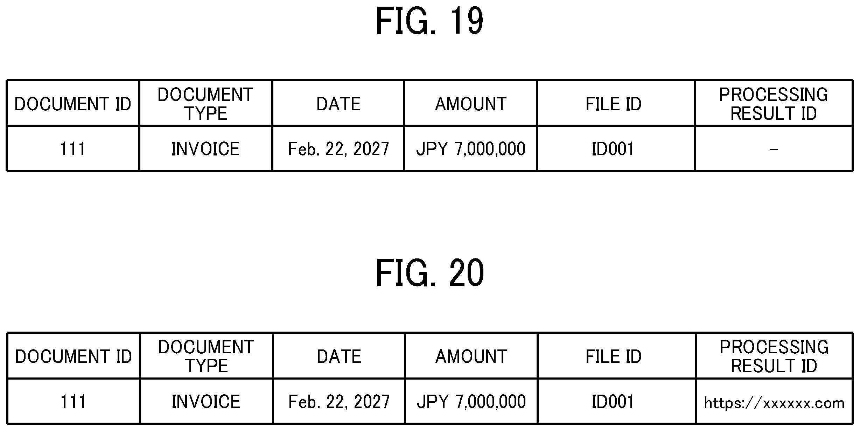

FIG. 19 is a table illustrating a state of target metadata at completion of step S113b according to the third embodiment of the present disclosure. As illustrated in FIG. 19, at the completion of step S113b, the target metadata includes the file ID. However, at this point, the target metadata does not include the processing result ID.

In step S114b, the document management unit 12 notifies the workflow control unit 13 of the completion of setting the target file ID and the like. The notification includes the target document ID.

Based on the notification of the completion of setting, the transition detection unit 133 of the workflow control unit 13 detects that satisfaction of the transition condition ("setting of target file ID completed") from task A to task B in the target workflow information (FIG. 18) related to the target document ID. In step S108, the assignment unit 134 notifies the sales manager of the assignment of task B (examination) to the target document based on the definition of task B ("examination by sales manager") of the target workflow information (FIG. 18) ("examination by sales manager"). The task B is the same as the task A in the first embodiment. Regarding the task B, steps S108 to S110 are executed in the same manner as the task A in the first embodiment.

Following step S110, in the case the examination result notified from the UI unit 11 is "completed", the transition detection unit 133 of the workflow control unit 13 detects satisfaction of the transition condition ("examination completed") from task B to task C based on the target workflow information (FIG. 18) related to the target document ID. Therefore, the processing result ID acquisition unit 136 of the workflow control unit 13 controls the task C based on the definition of the task C of the target workflow information ("acquire the processing result ID from the document processing apparatus 20").

In step S201, the processing result ID acquisition unit 136 designates the target document ID and requests the document management unit 12 to acquire the target file ID. In steps S202-1 and S202-2, the document management unit 12 acquires the target file ID from the target metadata (FIG. 19) corresponding to the target document ID. In step S203, the document management unit 12 notifies the processing result ID acquisition unit 136 of the acquired target file ID.

In step S204-1, the processing result ID acquisition unit 136 designates the target file ID and transmits a processing result ID acquisition request to the document processing unit 22 of the document processing apparatus 20. The document processing unit 22 generates the processing result ID (target processing result ID) for the processing result associated with the target file ID and associates the target processing result ID with the processing result. Accordingly, the target processing result ID also corresponds to the target file ID. The document processing unit 22 releases the lock on the processing result associated with the target processing result ID as the target processing result ID is generated. In step S204-2, the document processing unit 22 transmits a response including the target processing result ID to the processing result ID acquisition unit 136.

In response to receiving the target processing result ID, the processing result ID acquisition unit 136 controls the storage of the target processing result ID in the metadata storage unit 15 for the target document as a part of process of the task C. In step S205, the processing result ID acquisition unit 136 designates the target document ID and requests the document management unit 12 to set the target processing result ID in the target metadata (store the target processing result ID as metadata).

In step S206, in response to the request from the processing result ID acquisition unit 136, the document management unit 12 sets the target processing result ID in the target metadata corresponding to the target document ID designated in the request among the metadata stored in the metadata storage unit 15.

FIG. 20 is a table illustrating a state of target metadata at completion of step S206 according to the third embodiment of the present disclosure. As illustrated in FIG. 20, at the completion of step S206, the target metadata includes the processing result ID.

In step S207, the document management unit 12 notifies the workflow control unit 13 of the completion of the setting of the target processing result ID. The notification includes the target document ID.

Based on the notification of the completion of the setting, the transition detection unit 133 of the workflow control unit 13 detects satisfaction of the transition condition ("setting of processing result ID completed") from task C to task D in the target workflow information (FIG. 18) related to the target document ID. The task D and subsequent steps of the target workflow information (FIG. 18) in the third embodiment are the same as the task C and subsequent tasks of the target workflow information (FIG. 7) in the first embodiment. Accordingly, the same processing as the processing after task C (steps S115 to S125) in FIGs. 4A and 4B (FIG. 4) is executed after task D of FIG. 18.

As described above, according to the third embodiment, the same effect as that of the first embodiment can be obtained.

Further, in the third embodiment, the document file is uploaded to the document processing apparatus 20 before the approval by the sales manager. In this case, it is not preferable that the account processing by the accountant can be started for the target document that has not been approved by the sales manager. Therefore, in the third embodiment, the target processing result ID for the processing result by the document processing apparatus 20 is set in the target metadata not at the time of uploading the document file to the document processing apparatus 20 but after the approval is given by the sales manager. Accordingly, it is possible to prevent the account processing from being performed by the accountant before the approval is performed by the sales manager.

The locking and releasing of the processing result by the document processing unit 22 may be defined as a task in the workflow information.

Hereinafter, a fourth embodiment is described. In the fourth embodiment, the points different from each of the above embodiments is described. The points that are not particularly mentioned may be the same as in the above-described embodiments.

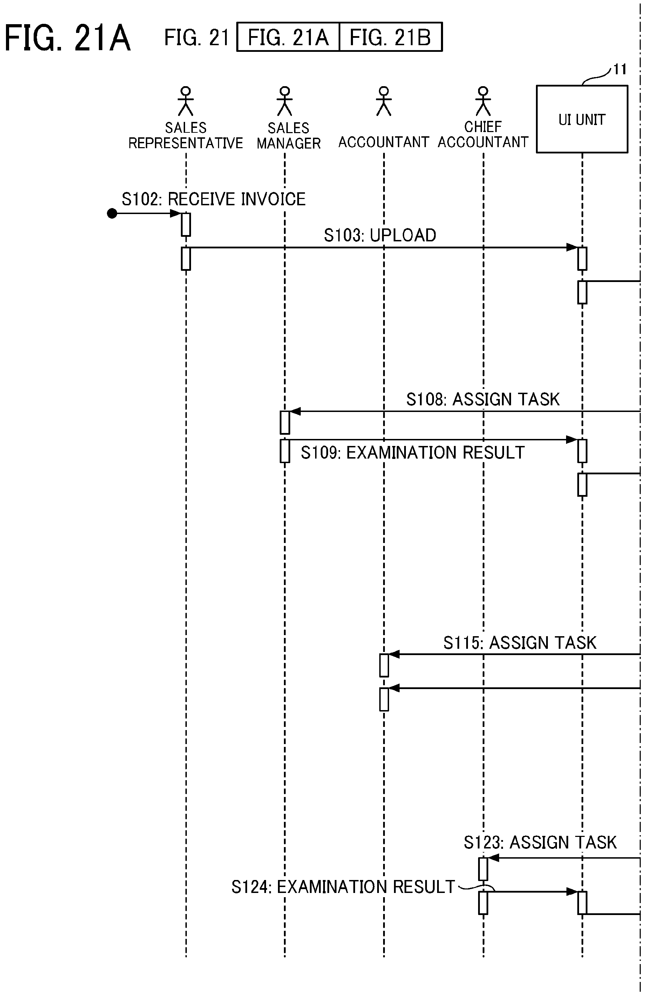

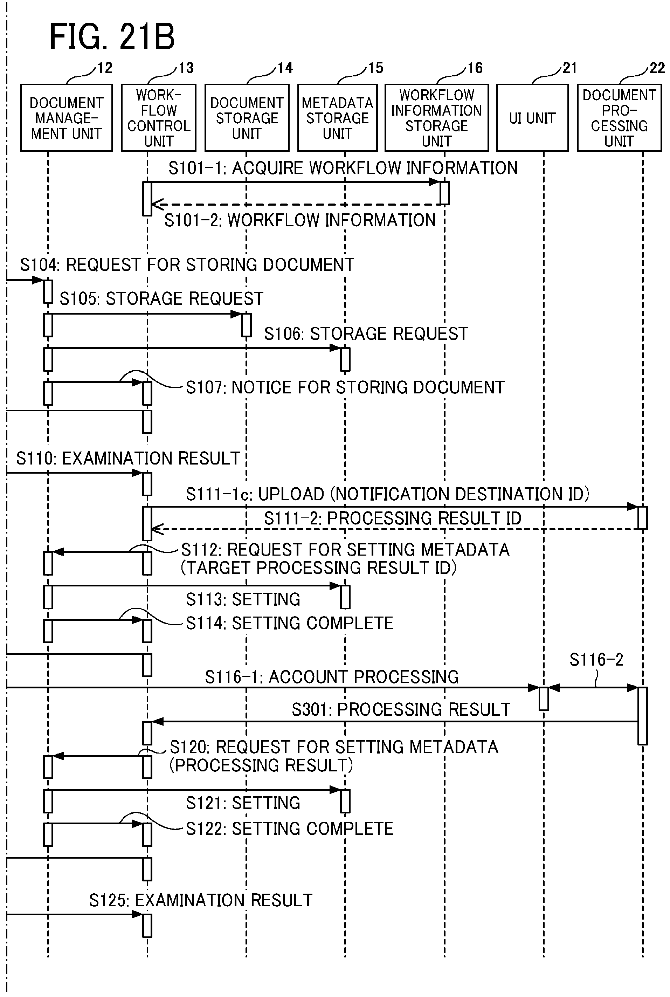

FIGs. 21A and 21B (FIG. 21) are a sequence diagram illustrating a process executed by the information processing system 1 according to the fourth embodiment of the present disclosure. In FIGs. 21A and 21B (FIG. 21), the same step numbers are assigned to the same steps as in FIGs. 4A and 4B (FIG. 4), and the description thereof is omitted.

In step S101 of FIGs. 21A and 21B (FIG. 21), workflow information different from that of FIG. 7 is acquired as target workflow information.

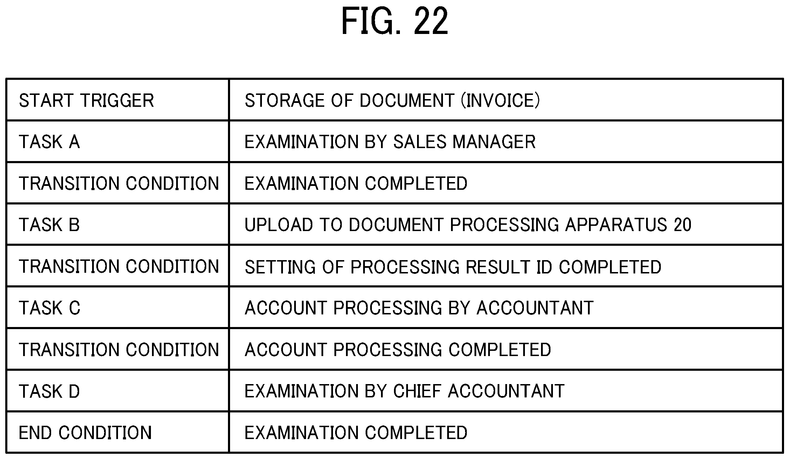

FIG. 22 is a diagram illustrating an example of the workflow information according to the fourth embodiment of the present disclosure. The workflow information of FIG. 22 is obtained by deleting the task D and the transition condition from the task D to the task E from the workflow information of FIG. 7. As a result, task E in FIG. 7 becomes task D in FIG. 22. The task D of FIG. 7 is the acquisition of the processing result from the document processing apparatus 20. In the fourth embodiment, the definition of the task D is unnecessary, because in the fourth embodiment, the document processing unit 22 notifies the workflow control unit 13 of the processing result.

In FIGs. 21A and 21B (FIG. 21), step S111-1 in FIGs. 4A and 4B (FIG. 4) is replaced with step S111-1c in order to enable the document processing unit 22 to notify the workflow control unit 13 of the processing result.

In step S111-1c, the upload unit 135 uploads (sends) the notification destination ID to the document processing unit 22 of the document processing apparatus 20 together with the target document file. The notification destination ID is identification information indicating the notification destination (callback destination) of the processing result. For example, in the present embodiment, the notification destination of the processing result is the processing result acquisition unit 137. The notification destination ID is, for example, address information (for example, a URL) for the processing result acquisition unit 137 to receive the processing result.

After that, when the account processing is completed and the process result related to the target document is confirmed, the document processing unit 22 transmits the process result to the notification destination ID in step S301.

In response to receiving the processing result by the processing result acquisition unit 137, the process after step S120 is executed.

As described above, according to the fourth embodiment, the same effect as the effect of the first embodiment can be obtained.

Further, in the fourth embodiment, the processing result reflecting the account processing is automatically transmitted from the document processing apparatus 20 to the document management apparatus 10. Accordingly, the accountant does not select the completion button 524 on the task list screen 520. In other words, by selecting the confirmation button 544 on the account processing screen 540, the completion button 524 on the task list screen 520 can also be selected. As a result, the workload of the accountant can be further reduced.

The user terminal 30 is not limited to a specific type of device as long as the device has a communication function. The user terminal 30 is, for example, an image forming apparatus, a projector (PJ), an interactive white board (IWB: a whiteboard having an electronic whiteboard function capable of mutual communication), an output device such as a digital signage, a head up display (HUD) device, an industrial machine, an imaging device, a sound collecting device, a medical device, a network home appliance, a notebook PC, a mobile phone, a smartphone, a tablet terminal, a game machine, a personal digital assistant (PDA), a digital camera, a wearable PC, a desktop PC or the like.

The apparatuses or devices described in the present embodiments are merely one example of plural computing environments that implement one or more embodiments disclosed herein.

In one embodiment, the document management apparatus 10 includes a plurality of computing devices such as server clusters. The plurality of computing devices is configured to communicate with one another through any type of communication link, including a network, shared memory, etc., and perform the processes disclosed herein. Similarly, the document processing apparatus 20 can include a plurality of computing devices configured to communicate with each other.

Further, the document management apparatus 10 and the document processing apparatus 20 can be configured to share the disclosed processing steps in various combinations. For example, a process executed by a predetermined functional unit may be executed by the document processing apparatus 20. Similarly, the function of the predetermined functional unit can be executed by the document processing apparatus 20. Further, each element of the document management apparatus 10 and the document processing apparatus 20 may be integrated into one server device or may be divided into a plurality of devices.

In each of the above embodiments, the document management apparatus 10 is an example of a data management apparatus. The document processing apparatus 20 is an example of a data processing apparatus.

The processing result ID acquisition unit 136 is an example of a first acquisition unit. The document storage unit 14 is an example of a first storage unit. The processing result ID is an example of first identification information. The metadata storage unit 15 is an example of a second storage unit. The file ID is an example of second identification information. The notification destination ID is an example third identification information. The sales representative is an example of a first user. The accountant is an example of a second user.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A data management apparatus (10) comprising:
a storage processing unit (12) for storing data transmitted from any one of one or more terminals (30) in a first storage unit (14);
a transmission unit (135) for transmitting the data stored in the first storage unit (14) to a data processing apparatus (20) for performing data processing on the data to generate a result of data processing by the data processing apparatus; wherein
the data is a document file transmitted from any one of the one or more terminals (30) and the processing is optical character recognition (OCR) processing;
a first acquisition unit (136) for acquiring from the data processing apparatus (20), first identification information for accessing the result of processing the data by the data processing apparatus (20), and for controlling storage of the first identification information in a second storage unit (15) that stores information to be transmitted to any one of the one or more terminals (30); wherein
the first acquisition unit (136) further acquires the result of processing; and
controls storage of a part of the result of the processing in the second storage unit (15); and wherein
the second storage unit (15) is a metadata storage unit (15).

2. The data management apparatus (10) of claim 1, further comprising:
a second acquisition unit (138) for acquiring from the data processing apparatus (20), second identification information for identifying the data transmitted to the data processing apparatus (20), and for controlling storage of the second identification information in the second storage unit (15),
wherein the first acquisition unit (136) acquires from the data processing apparatus (20), the first identification information corresponding to the second identification information stored in the second storage unit (15) in response to receiving a notification from any one of the one or more terminals (30) regarding the data stored in the first storage unit (14).

3. The data management apparatus (10) of claim 1, wherein
the transmission unit (135) transmits third identification information indicating a notification destination of the result of processing to the data processing apparatus (20), and
the data management apparatus (10) further comprises a third acquisition unit (137) for acquiring the result of processing transmitted by the data processing apparatus (20) with the third identification information as the notification destination.

4. The data management apparatus (10) of any one of claims 1 to 3, wherein
the storage processing unit (12) stores data transmitted from one of the terminals (30) used by a first user in the first storage unit (14), and
controls storage of the first identification information in the second storage unit (15) that stores information to be transmitted to one of the terminals (30) used by a second user different from the first user.

5. An information processing system (1) comprising the data processing apparatus (20) and the data management apparatus (10) of any one of claims 1 to 4.

6. A data management method comprising:
storing (S105) data transmitted from any one of one or more terminals (30) in a first storage unit (14);
transmitting (S111-1) the data stored in the first storage unit (14) to a data processing apparatus (20) for performing data processing on the data to generate a result of data processing by the data processing apparatus;
wherein the data is a document file transmitted from any one of the one or more terminals (30) and the processing is optical character recognition (OCR) processing;
acquiring (S111-2) from the data processing apparatus (20), first identification information for accessing the result of processing the data by the data processing apparatus (20) from outside of the data processing apparatus (20);
controlling (S113) storage of the first identification information in a second storage unit (15) that stores information to be transmitted to any one of the one or more terminals (30);
acquiring the result of processing (S112-a); and
controlling (S113a) storage of a part of the result of the processing in the second storage unit (15);
wherein second storage unit (15) is a metadata storage unit (15).

7. A carrier means carrying computer readable code for controlling a computer system to carry out the data management method of claim 6.

## Patentansprüche

1. Datenverwaltungsvorrichtung (10), die Folgendes umfasst:
eine Speicherungsverarbeitungseinheit (12) zum Speichern von Daten, die von einem beliebigen von einem oder mehreren Endgeräten (30) übermittelt werden, in einer ersten Speichereinheit (14),
eine Übermittlungseinheit (135) zum Übermitteln der in der ersten Speichereinheit (14) gespeicherten Daten an eine Datenverarbeitungsvorrichtung (20) zum Durchführen von Datenverarbeitung an den Daten, um ein Ergebnis einer Datenverarbeitung durch die Datenverarbeitungsvorrichtung zu erzeugen, wobei
die Daten eine Dokumentendatei sind, die von einem beliebigen von dem einen oder den mehreren Endgeräten (30) übermittelt wird, und die Verarbeitung eine Verarbeitung zur optischen Zeichenerkennung (OCR) ist,
eine erste Erfassungseinheit (136) zum Erfassen von der Datenverarbeitungsvorrichtung (20) von ersten Identifikationsinformationen zum Zugreifen auf das Ergebnis der Verarbeitung der Daten durch die Datenverarbeitungsvorrichtung (20) und zum Steuern einer Speicherung der ersten Identifikationsinformationen in einer zweiten Speichereinheit (15), die Informationen speichert, die an ein beliebiges von dem einen oder den mehreren Endgeräten (30) übermittelt werden sollen, wobei
die erste Erfassungseinheit (136) ferner das Ergebnis der Verarbeitung erfasst und
eine Speicherung eines Teils des Ergebnisses der Verarbeitung in der zweiten Speichereinheit (15) steuert, und wobei
die zweite Speichereinheit (15) eine Metadaten-Speichereinheit (15) ist.

2. Datenverwaltungsvorrichtung (10) nach Anspruch 1, die ferner Folgendes umfasst:
eine zweite Erfassungseinheit (138) zum Erfassen von der Datenverarbeitungsvorrichtung (20) von zweiten Identifikationsinformationen zum Identifizieren der Daten, die an die Datenverarbeitungsvorrichtung (20) übermittelt werden, und zum Steuern einer Speicherung der zweiten Identifikationsinformationen in der zweiten Speichereinheit (15),
wobei die erste Erfassungseinheit (136) als Reaktion auf das Empfangen einer Benachrichtigung von einem beliebigen von dem einen oder den mehreren Endgeräten (30) bezüglich der Daten, die in der ersten Speichereinheit (14) gespeichert sind, von der Datenverarbeitungsvorrichtung (20) die ersten Identifikationsinformationen erfasst, die den zweiten Identifikationsinformationen entsprechen, die in der zweiten Speichereinheit (15) gespeichert sind.

3. Datenverwaltungsvorrichtung (10) nach Anspruch 1, wobei
die Übermittlungseinheit (135) dritte Identifikationsinformationen, die ein Benachrichtigungsziel des Ergebnisses der Verarbeitung angeben, an die Datenverarbeitungsvorrichtung (20) übermittelt, und
die Datenverwaltungsvorrichtung (10) ferner eine dritte Erfassungseinheit (137) zum Erfassen des Ergebnisses der Verarbeitung umfasst, das durch die Datenverarbeitungsvorrichtung (20) übermittelt wird, mit den dritten Identifikationsinformationen als dem Benachrichtigungsziel.

4. Datenverwaltungsvorrichtung (10) nach einem der Ansprüche 1 bis 3, wobei
die Speicherungsverarbeitungseinheit (12) Daten, die von einem der Endgeräte (30) übermittelt werden, das durch einen ersten Benutzer verwendet wird, in der ersten Speichereinheit (14) speichert, und
eine Speicherung der ersten Identifikationsinformationen in der zweiten Speichereinheit (15) steuert, die Informationen speichert, die an eines der Endgeräte (30), das durch einen von dem ersten Benutzer verschiedenen zweiten Benutzer verwendet wird, übermittelt werden sollen.

5. Informationsverarbeitungssystem (1), das die Datenverarbeitungsvorrichtung (20) und die Datenverwaltungsvorrichtung (10) nach einem der Ansprüche 1 bis 4 umfasst.

6. Datenverwaltungsverfahren, das Folgendes umfasst:
Speichern (S105) von Daten, die von einem beliebigen von einem oder mehreren Endgeräten (30) übermittelt werden, in einer ersten Speichereinheit (14),
Übermitteln (S111-1) der in der ersten Speichereinheit (14) gespeicherten Daten an eine Datenverarbeitungsvorrichtung (20) zum Durchführen der Datenverarbeitung an den Daten, um ein Ergebnis der Datenverarbeitung durch die Datenverarbeitungsvorrichtung zu erzeugen,
wobei die Daten eine Dokumentendatei sind, die von einem beliebigen von dem einen oder den mehreren Endgeräten (30) übermittelt wird, und die Verarbeitung eine Verarbeitung zur optischen Zeichenerkennung (OCR) ist,
Erfassen (S111-2) von der Datenverarbeitungsvorrichtung (20) von ersten Identifikationsinformationen zum Zugreifen auf das Ergebnis der Verarbeitung der Daten durch die Datenverarbeitungsvorrichtung (20) von außerhalb der Datenverarbeitungsvorrichtung (20),
Steuern (S113) einer Speicherung der ersten Identifikationsinformationen in einer zweiten Speichereinheit (15), die Informationen speichert, die an ein beliebiges von dem einen oder den mehreren Endgeräten (30) übermittelt werden sollen,
Erfassen des Ergebnisses der Verarbeitung (S112-a), und
Steuern (S113a) einer Speicherung eines Teils des Ergebnisses der Verarbeitung in der zweiten Speichereinheit (15),
wobei die zweite Speichereinheit (15) eine Metadaten-Speichereinheit (15) ist.

7. Trägermittel, das einen rechnerlesbaren Code zum Steuern eines Rechnersystems überträgt, um das Datenverwaltungsverfahren nach Anspruch 6 auszuführen.

## Revendications

1. Appareil de gestion de données (10) comprenant :
une unité de traitement de stockage (12) pour stocker des données transmises depuis l'un quelconque d'un terminal ou de plusieurs terminaux (30) dans une première unité de stockage (14) ;
une unité de transmission (135) pour transmettre les données stockées dans la première unité de stockage (14) à un appareil de traitement de données (20) pour réaliser le traitement de données sur les données pour générer un résultat du traitement de données au moyen de l'appareil de traitement de données ; dans lequel
les données sont un fichier document transmis depuis l'un quelconque des un ou plusieurs terminaux (30) et le traitement est un traitement de reconnaissance optique de caractères (OCR) ;
une première unité d'acquisition (136) pour acquérir, en provenance de l'appareil de traitement de données (20), des premières informations d'identification pour accéder au résultat du traitement des données par l'appareil de traitement de données (20) et pour commander un stockage des premières informations d'identification dans une seconde unité de stockage (15) qui stocke des information à transmettre à l'un quelconque des un ou plusieurs terminaux (30) ; dans lequel
la première unité d'acquisition (136) acquiert en outre le résultat du traitement, et
commande un stockage d'une partie du résultat du traitement dans la seconde unité de stockage (15) ; et dans lequel
la seconde unité de stockage (15) est une unité de stockage de métadonnées (15).

2. Appareil de gestion de données (10) selon la revendication 1, comprenant en outre :
une deuxième unité d'acquisition (138) pour acquérir, en provenance de l'appareil de traitement de données (20), des deuxièmes informations d'identification pour identifier les données transmises à l'appareil de traitement de données (20), et pour commander un stockage des deuxièmes informations d'identification dans la seconde unité de stockage (15),
dans lequel la première unité d'acquisition (136) acquiert, en provenance de l'appareil de traitement de données (20), les premières informations d'identification correspondant aux deuxièmes informations d'identification stockées dans la seconde unité de stockage (15) en réponse à la réception d'une notification en provenance de l'un quelconque des un ou plusieurs terminaux (30) en ce qui concerne les données stockées dans la première unité de stockage (14).

3. Appareil de gestion de données (10) selon la revendication 1, dans lequel
l'unité de transmission (135) transmet des troisièmes informations d'identification indiquant une destination de notification du résultat du traitement à l'appareil de traitement de données (20), et
l'appareil de gestion de données (10) comprend en outre une troisième unité d'acquisition (137) pour acquérir le résultat du traitement transmis par l'appareil de traitement de données (20) avec les troisièmes informations d'identification en tant que destination de notification.

4. Appareil de gestion de données (10) selon l'une quelconque des revendications 1 à 3, dans lequel
l'unité de traitement de stockage (12) stocke des données transmises depuis l'un des terminaux (30) utilisé par un premier utilisateur dans la première unité de stockage (14), et
commande un stockage des premières informations d'identification dans la seconde unité de stockage (15) qui stocke les informations à transmettre à l'un des terminaux (30) utilisé par un second utilisateur différent du premier utilisateur.

5. Système de traitement d'informations (1) comprenant l'appareil de traitement de données (20) et l'appareil de gestion de données (10) selon l'une quelconque des revendications 1 à 4.

6. Procédé de gestion de données comprenant :
le stockage (S105) de données transmises depuis l'un quelconque d'un terminal ou de plusieurs terminaux (30) dans une première unité de stockage (14) ;
la transmission (S111-1) des données stockées dans la première unité de stockage (14) à un appareil de traitement de données (20) pour réaliser le traitement de données sur les données pour générer un résultat du traitement de données au moyen de l'appareil de traitement de données ;
dans lequel les données sont un fichier document transmis depuis l'un quelconque des un ou plusieurs terminaux (30) et le traitement est un traitement de reconnaissance optique de caractères (OCR) ;
l'acquisition (S111-2), en provenance de l'appareil de traitement de données (20), de premières informations d'identification pour accéder au résultat du traitement des données par l'appareil de traitement de données (20) depuis l'extérieur de l'appareil de traitement de données (20) ;
la commande (S113) d'un stockage des premières informations d'identification dans une seconde unité de stockage (15) qui stocke des informations à transmettre à l'un quelconque des un ou plusieurs terminaux (30) ;
l'acquisition du résultat du traitement (S112-a) ; et
la commande (S113a) d'un stockage d'une partie du résultat du traitement dans la seconde unité de stockage (15) ;
dans lequel la seconde unité de stockage (15) est une unité de stockage de métadonnées (15).

7. Moyen de support porteur d'un code lisible par ordinateur pour commander un système informatique pour mettre en œuvre le procédé de gestion de données selon la revendication 6.
